(19) Europäisches Patentamt
European Patent Office
Office européen des brevets

(11) **EP 4 517 576 A1**

(12) **EUROPEAN PATENT APPLICATION**
published in accordance with Art. 153(4) EPC

(43) Date of publication:
**05.03.2025 Bulletin 2025/10**

(21) Application number: **24794682.5**

(22) Date of filing: **15.03.2024**

(51) International Patent Classification (IPC):
***G06F 30/23*** *(2020.01)*

(86) International application number:
**PCT/CN2024/081820**

(87) International publication number:
**WO 2025/011073 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 CN 202310836652**

(71) Applicants:
• **Guangdong Power Grid Co., Ltd.**
**Guangzhou, Guangdong 510080 (CN)**
• **Electric Power Research Institute**
**Of Guangdong Power Grid Co., Ltd.**
**Guangzhou, Guangdong 510080 (CN)**

(72) Inventors:
• **FU, Qiang**
**Guangzhou, Guangdong 510080 (CN)**
• **LI, Zhi**
**Guangzhou, Guangdong 510080 (CN)**
• **PENG, Lei**
**Guangzhou, Guangdong 510080 (CN)**
• **ZHANG, Li**
**Guangzhou, Guangdong 510080 (CN)**
• **LIN, Musong**
**Guangzhou, Guangdong 510080 (CN)**

(74) Representative: **Meyer, Thorsten**
**Meyer Patentanwaltskanzlei**
**Pfarrer-Schultes-Weg 14**
**89077 Ulm (DE)**

(54) **DRY-TYPE TRANSFORMER INSULATION STRUCTURE OPTIMIZATION METHOD AND SYSTEM**

(57) The present disclosure provides a method and system for optimizing an insulation structure of a dry-type transformer. Transformer structure data is obtained, and a two-dimensional axisymmetric finite element model and an equivalent circuit model of a winding are constructed based on the transformer structure data. Information of a maximum electric field in an airway of the winding and information of a maximum electric field in a wire cake are obtained based on the equivalent circuit model of the winding. Then, a parameter optimization model is constructed based on the information of the maximum electric field in the airway of the winding, the information of the maximum electric field in the wire cake, and data of the winding, and solved to obtain optimal parameters, whereby personnel optimize a transformer structure based on the optimal parameters. The optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes. The method for optimizing an insulation structure can effectively reduce a maximum electric field in an airway and a maximum electric field between wire cakes for a dry-type transformer under lightning impulse, and improve reliability and safety of an insulation structure of the dry-type transformer.

Acquire transformer structure data, and construct a two-dimensional axisymmetric finite element model and an equivalent circuit model of a winding based on the transformer structure data — 101

Obtain information of a maximum electric field in an airway of the winding and information of a maximum electric field in a wire cake based on the equivalent circuit model of the winding, where the information of the maximum electric field includes occurrence time and a position of the maximum electric field — 102

Construct a parameter optimization model based on the information of the maximum electric field in the airway of the winding, the information of the maximum electric field in the wire cake, and data of the winding, and solve the parameter optimization model to obtain optimal parameters, such that personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes — 103

FIG. 1

# Description

## TECHNICAL FIELD

The present disclosure relates to the technical field of transformers, and in particular, to a method and system for optimizing an insulation structure of a dry-type transformer.

## BACKGROUND

A power transformer is one of indispensable devices in a power system. A traditional oil-immersed transformer requires a large amount of maintenance work and also has safety hazards such as oil leakage and explosions. With the development of technologies, a dry-type transformer has become a new choice. The dry-type transformer is a type of power transformer that achieves an insulation effect by using other insulation materials such as resin, gas, and fiber instead of using insulation oil. The dry-type transformer has characteristics of fire prevention, no pollution, and no maintenance, and is increasingly widely used in a distribution network and a new energy system.

An insulation structure of a transformer is crucial for safe and stable operation of the transformer. The insulation structure of the transformer includes a series of elements that make up an insulation system inside the transformer, such as an insulation material, an insulation structure form, an insulation distance, and an insulation joint. A good insulation structure can ensure the safe operation of the transformer and extend a service life of the transformer.

## SUMMARY

In order to solve the above technical problems, embodiments of the present disclosure provide a method and system for optimizing an insulation structure of a dry-type transformer, which can effectively reduce a maximum electric field in an airway and a maximum electric field between wire cakes for a dry-type transformer under lightning impulse, and improve reliability and safety of an insulation structure of the dry-type transformer.

A first aspect of the embodiments of the present disclosure provides a method for optimizing an insulation structure of a dry-type transformer, where the method includes:

acquiring transformer structure data, and constructing a two-dimensional axisymmetric finite element model and an equivalent circuit model of a winding based on the transformer structure data;

obtaining information of a maximum electric field in an airway of the winding and information of a maximum electric field in a wire cake based on the equivalent circuit model of the winding, where the information of the maximum electric field includes occurrence time and a position of the maximum electric field; and

constructing a parameter optimization model based on the information of the maximum electric field in the airway of the winding, the information of the maximum electric field in the wire cake, and data of the winding, and solving the parameter optimization model to obtain optimal parameters, whereby personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes.

In implementing this embodiment, the transformer structure data is obtained, and the two-dimensional axisymmetric finite element model and the equivalent circuit model of the winding are constructed based on the transformer structure data. The information of the maximum electric field in the airway of the winding and the information of the maximum electric field in the wire cake are obtained based on the equivalent circuit model of the winding. Then, the parameter optimization model is constructed based on the information of the maximum electric field in the airway of the winding, the information of the maximum electric field in the wire cake, and the data of the winding, and solved to obtain the optimal parameters, whereby the personnel optimize the transformer structure based on the optimal parameters. The optimal parameters include the width of the airway between the high-voltage windings, the width of the airway between the low-voltage windings, the thickness of the inner-side encapsulated layer of the high-voltage winding, the height of the wire cake of the high-voltage winding, and the spacing between the wire cakes. The method for optimizing an insulation structure can effectively reduce a maximum electric field in an airway and a maximum electric field between wire cakes for a dry-type transformer under lightning impulse, and improve reliability and safety of an insulation structure of the dry-type transformer.

In a possible implementation of the first aspect, the constructing a two-dimensional axisymmetric finite element model an equivalent circuit model of a winding based on the transformer structure data is specifically as follows:

constructing the two-dimensional axisymmetric finite element model of the winding based on the transformer structure data;

conducting an insulation test based on the two-dimensional axisymmetric finite element model, and obtaining equivalent resistance data, inductance data, and capacitance parameter data of each wire cake under the insulation test; and

constructing the equivalent circuit model of the winding based on the equivalent resistance data, the inductance data, and the capacitance parameter data.

In a possible implementation of the first aspect, the obtaining information of a maximum electric field in an airway of the winding and information of a maximum electric field in a wire cake based on the equivalent circuit model of the winding is specifically as follows:

solving the equivalent circuit model of the winding to obtain a transient potential of each wire cake; and inputting the transient potential into the two-dimensional axisymmetric finite element model for simulation, obtaining a transient electric field at each point of the winding, and obtaining the information of the maximum electric field in the airway of the winding and the information of the maximum electric field in the wire cake based on the transient electric field.

In a possible implementation of the first aspect, the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables;
obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes;
generating initial samples by performing multidimensional uniform sampling on the sample set, and calculating a lightning impulse response of the initial samples, so as to obtain responsiveness and fitness of each initial sample; and
if the responsiveness and the fitness of each initial sample meet a preset condition, outputting the initial samples as the optimal parameters; or if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

In implementing this embodiment, after the parameter optimization model is constructed by using the maximum electric field in the airway of the winding and the maximum electric field in the wire cake as the optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as the optimization variables, the sample set is obtained based on the value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes. The initial samples are generated by performing the multidimensional uniform sampling on the sample set, and the lightning impulse response of the initial samples is calculated, to obtain the responsiveness and the fitness of each initial sample. If the responsiveness and the fitness of each initial sample meet the preset condition, the initial samples are output as the optimal parameters. If the responsiveness and the fitness of each initial sample do not meet the preset condition, the Kriging surrogate model is constructed using the sample set, and used to update the sample set and calculate the lightning impulse response, and this step is repeated iteratively until the optimal parameters are obtained. When the optimal parameters are sought, an optimization algorithm uses the Kriging surrogate model instead of partial finite element simulation, which saves computational resources and time, and thus improves the optimization efficiency.

In a possible implementation of the first aspect, the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples;
calculating fitness of the new candidate samples by using the initial Kriging surrogate model, to obtain fitness of each new candidate sample, and sorting each new candidate sample in descending order based on the fitness of each new candidate sample to obtain a first ranking sequence number of each new candidate sample;
calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

A second aspect of the embodiments of the present disclosure provides a system for optimizing an insulation structure of a dry-type transformer, where the system includes:

an acquisition module configured to acquire transformer structure data, and construct a two-dimensional axisymmetric finite element model and an equivalent circuit model of a winding based on the transformer structure data;
a model construction module configured to obtain information of a maximum electric field in an airway of the winding and information of a maximum electric field in a wire cake based on the equivalent circuit model of the winding, where the information of the maximum electric field includes occurrence time and a position of the maximum electric field; and
an optimization module configured to construct a parameter optimization model based on the information of the maximum electric field in the airway of the winding, the information of the maximum electric field in the wire cake, and data of the winding, and solve the parameter optimization model to obtain optimal parameters, whereby personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes.

In a possible implementation of the second aspect, the acquisition module includes a finite element model construction unit, an insulation test unit, and an equivalent circuit model construction unit, where

the finite element model construction unit is configured to construct the two-dimensional axisymmetric finite element model of the winding based on the transformer structure data;
the insulation test unit is configured to conduct an insulation test based on the two-dimensional axisymmetric finite element model, and obtain equivalent resistance data, inductance data, and capacitance parameter data of each wire cake under the insulation test; and
the equivalent circuit model construction unit is configured to construct the equivalent circuit model of the winding based on the equivalent resistance data, the inductance data, and the capacitance parameter data.

In a possible implementation of the second aspect, the model construction module includes a transient potential unit and a maximum electric field unit, where

the transient potential unit is configured to solve the equivalent circuit model of the winding to obtain a transient potential of each wire cake; and
the maximum electric field unit is configured to input the transient potential into the two-dimensional axisymmetric finite element model for simulation, obtain a transient electric field at each point of the winding, and obtain the information of the maximum electric field in the airway of the winding and the information of the maximum electric field in the wire cake based on the transient electric field.

In a possible implementation of the second aspect, the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables;
obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes;

generating initial samples by performing multidimensional uniform sampling on the sample set, and calculating a lightning impulse response of the initial samples, so as to obtain responsiveness and fitness of each initial sample; and

if the responsiveness and the fitness of each initial sample meet a preset condition, outputting the initial samples as the optimal parameters; or if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

In a possible implementation of the second aspect, the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples;

calculating fitness of the new candidate samples by using the initial Kriging surrogate model, to obtain fitness of each new candidate sample, and sorting each new candidate sample in descending order based on the fitness of each new candidate sample to obtain a first ranking sequence number of each new candidate sample;

calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and

selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

The present disclosure obtains the transformer structure data, constructs the two-dimensional axisymmetric finite element model and the equivalent circuit model of the winding based on the transformer structure data, obtains the information of the maximum electric field in the airway of the winding and the information of the maximum electric field in the wire cake based on the equivalent circuit model of the winding, constructs the parameter optimization model based on the information of the maximum electric field in the airway of the winding, the information of the maximum electric field in the wire cake, and the data of the winding, and solves the parameter optimization model to obtain the optimal parameters, whereby the personnel optimize the transformer structure based on the optimal parameters. The optimal parameters include the width of the airway between the high-voltage windings, the width of the airway between the low-voltage windings, the thickness of the inner-side encapsulated layer of the high-voltage winding, the height of the wire cake of the high-voltage winding, and the spacing between the wire cakes. The method for optimizing an insulation structure can effectively reduce a maximum electric field in an airway and a maximum electric field between wire cakes for a dry-type transformer under the lightning impulse, and improve reliability and safety of an insulation structure of the dry-type transformer.

## BRIEF DESCRIPTION OF THE DRAWINGS

FIG. 1 is a schematic flowchart of an embodiment of a method for optimizing an insulation structure of a dry-type transformer according to the present disclosure;

FIG. 2 is a schematic diagram of a two-dimensional axisymmetric finite element model of a single-phase winding of a transformer in an embodiment of a method for optimizing an insulation structure of a dry-type transformer according to the present disclosure;

FIG. 3 is a schematic diagram of an equivalent circuit of a high-voltage winding of a transformer under lightning impulse in an embodiment of a method for optimizing an insulation structure of a dry-type transformer according to the present disclosure;

FIG. 4 schematically shows potential fluctuation curves of some wire cakes in an embodiment of a method for optimizing an insulation structure of a dry-type transformer according to the present disclosure;

FIG. 5 is a schematic diagram of an electric field distribution in an airway before optimization in an embodiment of a method for optimizing an insulation structure of a dry-type transformer according to the present disclosure;

FIG. 6 is a schematic diagram of an electric field distribution between some wire cakes before optimization in an embodiment of a method for optimizing an insulation structure of a dry-type transformer according to the present disclosure;

FIG. 7 is a schematic flowchart of calculating a maximum electric field in an airway and a maximum electric field between wire cakes under lightning impulse in an embodiment of a method for optimizing an insulation structure of a dry-type transformer according to the present disclosure;

FIG. 8 is a schematic flowchart of an insulation structure optimization algorithm in an embodiment of a method for optimizing an insulation structure of a dry-type transformer according to the present disclosure;

FIG. 9 is a schematic diagram of an electric field distribution in an airway after optimization in an embodiment of a method for optimizing an insulation structure of a dry-type transformer according to the present disclosure;

FIG. 10 is a schematic diagram of an electric field distribution between some wire cakes after optimization in an embodiment of a method for optimizing an insulation structure of a dry-type transformer according to the present disclosure; and

FIG. 11 is a schematic structural diagram of a system in another embodiment of a method for optimizing an insulation structure of a dry-type transformer according to the present disclosure.

## DETAILED DESCRIPTION

The technical solutions of the embodiments of the present disclosure are clearly and completely described below with reference to the drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the protection scope of the present disclosure.

Embodiment 1

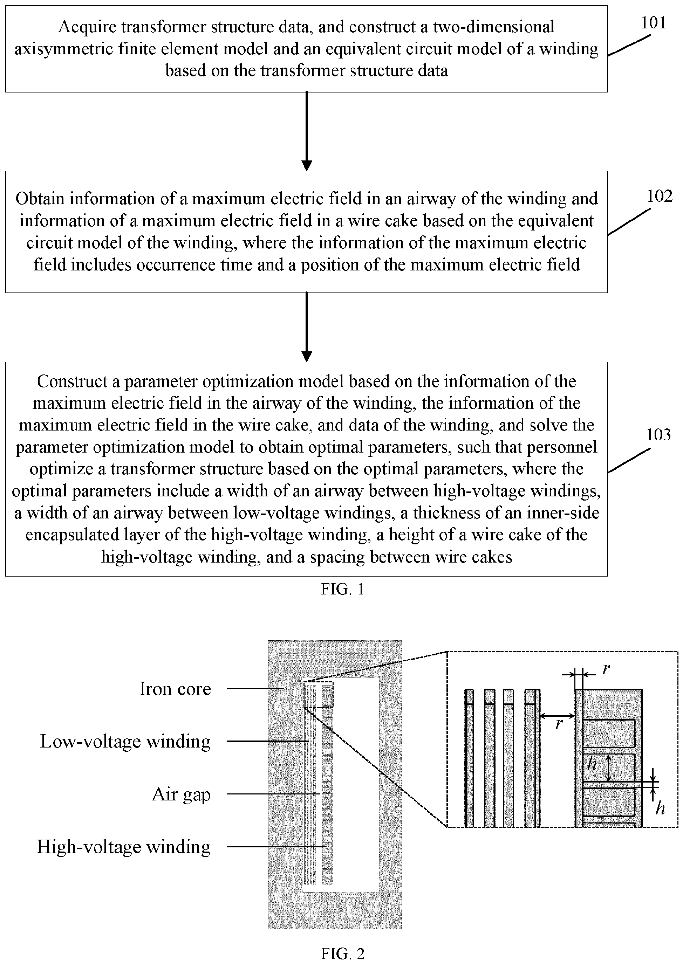

FIG. 1 is a schematic flowchart of an embodiment of a method for optimizing an insulation structure of a dry-type transformer according to this embodiment of the present disclosure. The method includes following steps S11 to S13:
S11: Acquire transformer structure data, and construct a two-dimensional axisymmetric finite element model and an equivalent circuit model of a winding based on the transformer structure data.

In a preferred embodiment, the constructing a two-dimensional axisymmetric finite element model and an equivalent circuit model of a winding based on the transformer structure data is specifically as follows:

constructing the two-dimensional axisymmetric finite element model of the winding based on the transformer structure data;
conducting an insulation test based on the two-dimensional axisymmetric finite element model, and obtaining equivalent resistance data, inductance data, and capacitance parameter data of each wire cake under the insulation test; and
constructing the equivalent circuit model of the winding based on the equivalent resistance data, the inductance data, and the capacitance parameter data.

In this embodiment, a two-dimensional axisymmetric finite element model of a single-phase winding is constructed based on a structure of a dry-type transformer. Then, equivalent resistance, inductance, and capacitance parameters of a wire cake unit under lightning impulse are calculated, and a lumped parameter equivalent circuit model of the winding is constructed.

It should be noted that the insulation test of the transformer includes a power-frequency voltage-withstand test and a lightning impulse test. The power-frequency voltage-withstand test has a low voltage but long voltage applying time (1 minute), while the lightning impulse test has a high voltage level and short duration (microsecond level). The two tests can optimize an insulation structure of the transformer based on test results. The lightning impulse test is simulated herein to mainly use a higher voltage to generate a larger electric field locally. The insulation structure of the transformer is optimized by using whether the local electric field exceeds breakdown field strength as an indicator. Certainly, simulation can also be conducted using a voltage of the power-frequency voltage-withstand test, to optimize the structure with an optimization objective of maximizing an insulation margin.

It should be noted that this method can be applied to structure optimization of all transformers, not limited to the dry-type transformer.

As an example of this embodiment, taking an SCB14-2000/10/0.4 three-phase dry-type transformer as an example, a rated capacity of the transformer is 2,000 kVA, and a voltage is 10/0.4 kV. A high-voltage winding is a cake winding, containing 35 wire cakes. Turn-to-turn insulation inside the wire cake is ignored, and a silicone rubber material is poured outside the wire cake as an insulation layer. A low-voltage side is a foil winding that internally contains three layers of airways and is poured with the silicone rubber material on an outer side as an encapsulated layer. An airway between the high-voltage winding and the low-voltage winding is used for major insulation, and the encapsulated layer on the outer side of the low-voltage winding and an inner side of the high-voltage winding are used for backup insulation.

An airway between the winding and an iron core, and an airway between the winding and an iron yoke are used for the major insulation, and the silicone rubber encapsulated layer is used for the backup insulation. The silicone rubber material is used for longitudinal insulation between the wire cakes inside the high-voltage winding. The two-dimensional axisymmetric finite element model of the single-phase winding of the transformer is shown in FIG. 2.

Firstly, simulated analysis is performed on a two-dimensional axisymmetric model of the winding to obtain equivalent capacitance, equivalent inductance, and equivalent resistance parameters of each wire cake. Equivalent capacitance of the wire cake includes longitudinal capacitance between the wire cakes and direct-to-ground capacitance of the wire cake. A steady-state source scanning method can be used to calculate a partial capacitance matrix of the wire cake for the winding model in FIG. 2. A partial capacitance matrix for the top four wire cakes of the winding is as follows:

$$C = \begin{bmatrix} 47.9 & 494.1 & 2.5 & 0.8 \\ 494.1 & 13.7 & 492.4 & 2.0 \\ 2.5 & 492.4 & 12.8 & 492.3 \\ 0.8 & 2.0 & 492.3 & 12.2 \end{bmatrix} \text{pF}$$

In the matrix, a diagonal element represents the direct-to-ground capacitance of the wire cake, and a non-diagonal element represents the capacitance between the wire cakes, for example, $C_{12}$ represents capacitance between wire cakes 1 and 2.

It can be seen numerically that capacitance between adjacent wire cakes is at least two orders of magnitude larger than that between non-adjacent wire cakes. Therefore, when an equivalent circuit is constructed, only the direct-to-ground capacitance of the wire cake and the capacitance between the adjacent wire cakes are considered.

Equivalent inductance of the winding includes self-inductance of each wire cake and mutual inductance between the wire cakes. An alternating current excitation $I_i$ with an angular frequency of $\omega$ is applied to a wire cake i to analyze a voltage $U_j$ on a wire cake j, and the equivalent inductance is as follows:

$$L_{i,j} = \frac{1}{\omega} \text{Im}\left(\frac{U_j}{I_i}\right)$$

In the above formula, $U_j$ represents the voltage on the wire cake j, and $I_i$ represents the alternating current excitation.

When i=j, $L_{i,j}$ represents self-inductance of the wire cake i. When i ≠ j, $L_{i,j}$ represents mutual inductance between the wire cake i and the wire cake j. The equivalent inductance of the winding is related to a frequency of an impulse voltage. Considering that a frequency of the lightning impulse generally ranges from tens of kHz to hundreds of kHz, an average inductance value within this frequency band is taken for circuit modeling. An inductance matrix L of the top five wire cakes is extracted from the winding model in FIG. 2, which is as follows:

$$L = \begin{bmatrix} 96.9 & 74.9 & 61.2 & 44.5 & 27.3 \\ 74.9 & 94.7 & 76.6 & 55.3 & 33.6 \\ 61.2 & 76.6 & 100.5 & 71.4 & 42.5 \\ 44.5 & 55.3 & 71.4 & 116.7 & 78.4 \\ 27.3 & 33.6 & 42.5 & 78.4 & 138.3 \end{bmatrix} \mu\text{H}$$

It can be seen that due to a tight coupling characteristic of the winding, there is a large mutual inductance value between the adjacent wire cakes, and a distance-dependent attenuation rate is lower than some capacitance values. Therefore, a circuit model cannot ignore an impact of the mutual inductance.

Finally, the equivalent resistance of each wire cake is related to quantity of turns. In addition, due to a skin effect of a conductor, resistance of the wire cake increases with an increasing frequency. $R_i$ is applied to the wire cake in the winding model in FIG. 2 to extract resistance of each wire cake under the lightning impulse, which fluctuates from 1.5 Ω to 2.3 Ω. The $R_i$ is as follows:

$$R_i = \text{Re}\left(\frac{U_i}{I_i}\right)$$

S12: Obtain information of a maximum electric field in an airway of the winding and information of a maximum electric field in the wire cake based on the equivalent circuit model of the winding, where the information of the maximum electric field includes occurrence time and a position of the maximum electric field.

In a preferred embodiment, the obtaining information of a maximum electric field in an airway of the winding and information of a maximum electric field in the wire cake based on the equivalent circuit model of the winding is specifically as follows:

solving the equivalent circuit model of the winding to obtain a transient potential of each wire cake; and inputting the transient potential into the two-dimensional axisymmetric finite element model for simulation, obtaining a transient electric field at each point of the winding, and obtaining the information of the maximum electric field in the airway of the winding and the information of the maximum electric field in the wire cake based on the transient electric field.

In this embodiment, a response of the equivalent circuit model under the lightning impulse is solved to obtain transient potentials of each wire cake at different time points. The transient potential is input into the two-dimensional axisymmetric finite element model for transient simulation to obtain the transient electric field at each point of the winding, and obtain occurrence time and positions of the maximum electric field in the airway and a maximum electric field between the wire cakes for the single-phase winding of the transformer in a lightning impulse process. Compared with electric field simulation and calculation of an insulation system of the transformer under a constant voltage, this method simulates and calculates a transient process of the transformer under the lightning impulse, which is closer to a real working condition of the transformer and improves effectiveness of verifying the insulation system.

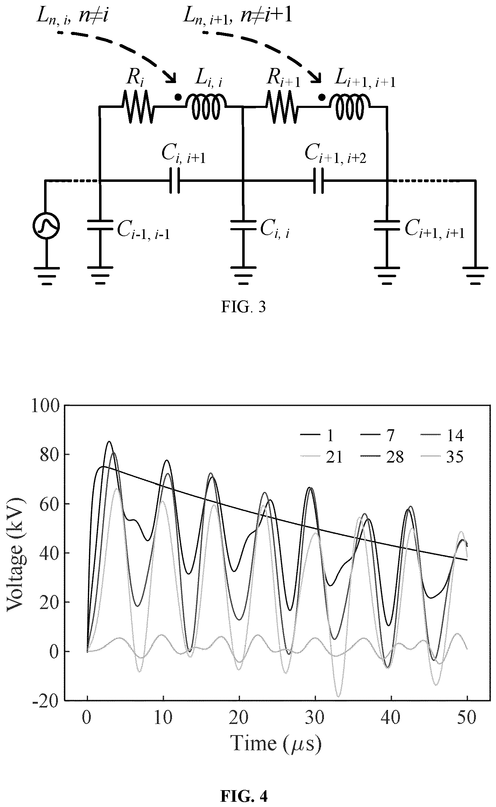

As an example of this embodiment, for a continuous winding shown in FIG. 2, its equivalent circuit is constituted by connecting equivalent circuits of a plurality of wire cakes in series, as shown in FIG. 3. An equivalent circuit of an $i^{th}$ wire cake includes a parallel direct-to-ground capacitor $C_{i,i}$, a capacitor $C_{i,i+1}$ connected in series between cakes, a series resistor $R_i$, and a series self-inductor $L_{i,i}$ and mutual inductor $L_{n,i}$. A lightning impulse voltage is applied at a start end of the equivalent circuit, and a tail end of the equivalent circuit is grounded.

A full-wave lightning impulse voltage can be simulated using a double exponential function, which is expressed as follows:

$$u(t) = kU_m(e^{-\alpha t} - e^{-\beta t}), \ t \geq 0$$

In the above expression, $U_m$ represents a peak voltage, and k represents a coefficient.

According to the IEC standard, for a 10 kV transformer, the peak voltage $U_m$ is 75 kV, the coefficient k is 1.034, wave front time is 1.2 $\mu$s, and wave tail time is 50 $\mu$ s, and corresponding $\alpha$ and $\beta$ are respectively 0.0147 $\mu$s-1 and 2.47 $\mu$s-1.

Then, the equivalent circuit shown in FIG. 2 is solved to obtain a fluctuation curve of a potential of each wire cake over time. FIG. 4 shows potential fluctuation curves of $1^{st}$, $7^{th}$, $14^{th}$, $21^{th}$, $28^{th}$, and $35^{th}$ wire cakes. A maximum potential occurs on the $7^{th}$ wire cake at t=2.86 $\mu$s, which is 85.28 kV. A maximum voltage between the wire cakes is 8.76 kV, which occurs between the $1^{st}$ and $2^{nd}$ wire cakes at t=0.63 $\mu$s.

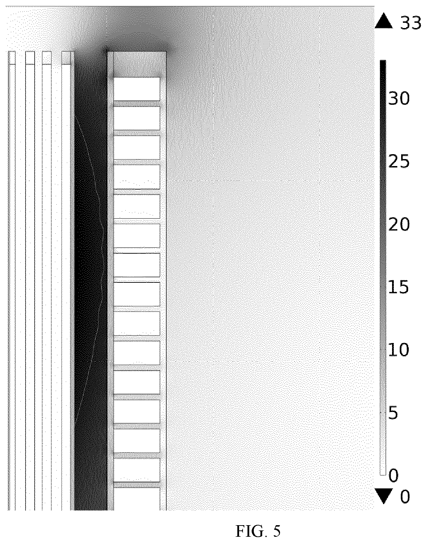

The potential curve of each wire cake is input into an electrostatic field model of the winding for the transient simulation to obtain a variation curve of an electric field at each point in space over time. At t=2.86 $\mu$s, an electric field in the airway is the strongest, as shown in FIG. 5. The maximum electric field is 33.0 kV/cm, which occurs on an outer side of a low-voltage winding close to the $7^{th}$ wire cake, and breakdown field strength of air is 30 kV/cm. An area exceeding the breakdown field strength of the air is circled with an arc in FIG. 5.

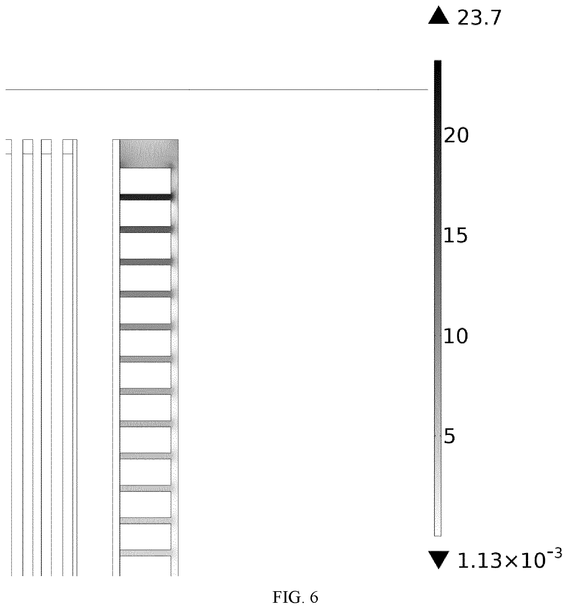

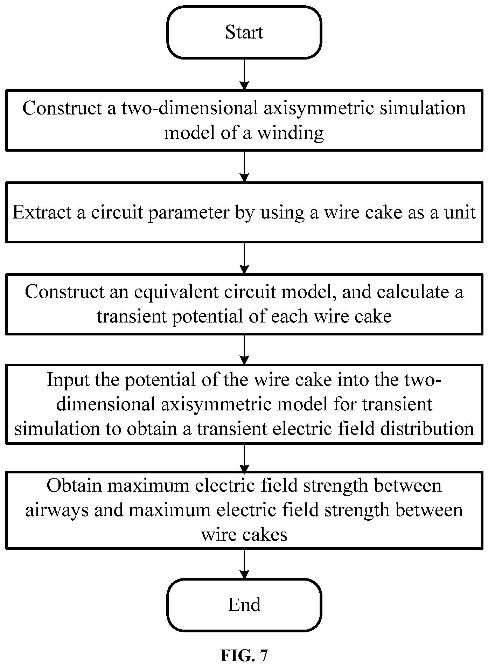

At t=0.63 $\mu$s, an electric field between the wire cakes reaches its maximum value, as shown in FIG. 6. The maximum electric field is 23.7 kV/cm, which occurs between the $1^{st}$ and $2^{nd}$ wire cakes. A calculation process of the maximum electric field in the airway and the maximum electric field between the wire cakes under the lightning impulse is shown in FIG. 7.

S13: Construct a parameter optimization model based on the information of the maximum electric field in the airway of the winding, the information of the maximum electric field in the wire cake, and data of the winding, and solve the parameter optimization model to obtain optimal parameters, whereby personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between the wire cakes.

In a preferred embodiment, the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables;

obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes;

generating initial samples by performing multidimensional uniform sampling on the sample set, and calculating a lightning impulse response of the initial samples, so as to obtain responsiveness and fitness of each initial sample; and

if the responsiveness and the fitness of each initial sample meet a preset condition, outputting the initial samples as the optimal parameters; or if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

In a preferred embodiment, the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples;

calculating fitness of the new candidate sample by using the initial Kriging surrogate model, to obtain fitness of each new candidate sample, and sorting each new candidate sample in descending order based on the fitness of each new candidate sample to obtain a first ranking sequence number of each new candidate sample;

calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and

selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

In this embodiment, structure parameter optimization is performed with an objective of reducing the maximum electric field in the airway and the maximum electric field between the wire cakes in the lightning impulse process. Specifically, the structure parameter optimization is performed with the objective of reducing the maximum electric field in the airway and the maximum electric field between the wire cakes in the lightning impulse process, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as the optimization variables. Sample parameter space is determined based on the value ranges of the variables to perform the structure parameter optimization.

During the structure parameter optimization, a sample set uniformly distributed in the parameter space is first generated, and the above algorithm is executed to use the calculated maximum electric fields in the airway and between the wire cakes as a response. The initial Kriging surrogate model is constructed based on the parameter and the response. In a subsequent optimization cycle, the new samples are determined based on uniformity and an evaluation result of the Kriging surrogate model, and the above algorithm is executed to update the Kriging surrogate model by using the new samples and its response. When fitness of the response meets a required optimization objective or reaches a maximum quantity of cycles, the optimal parameters are output.

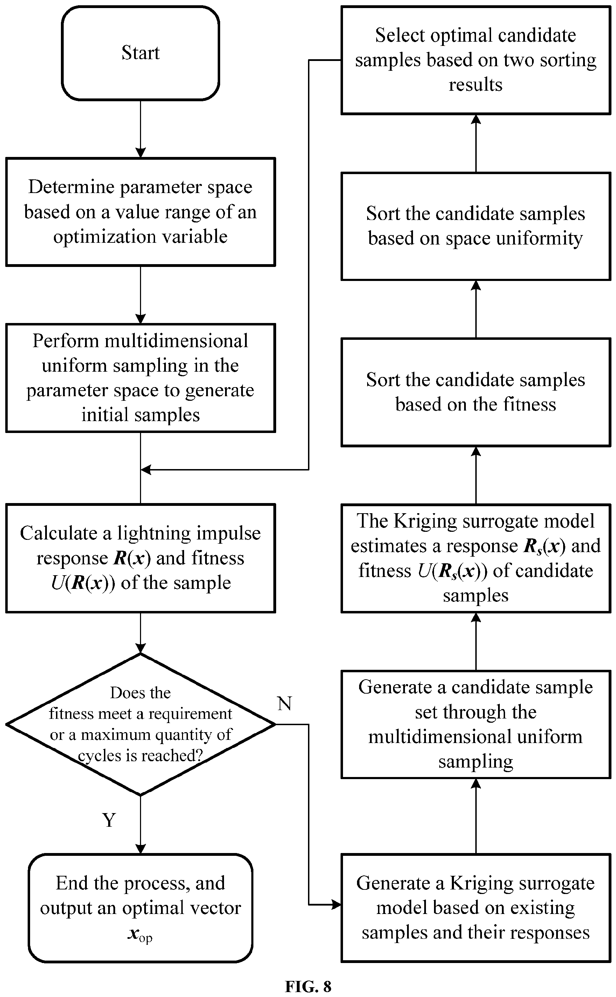

As an example of this embodiment, a flowchart of an insulation structure optimization algorithm is shown in FIG. 8. An optimization vector x is constituted by four structure variables $x=(r_1, r_2, h_1, h_2)$, where $r_1$ represents the width of the airway between the high-voltage windings and the width of the airway between the low-voltage windings, $r_2$ represents the thickness of the inner-side encapsulated layer of the high-voltage winding, $h_1$ represents the height of the wire cake of the high-voltage winding, and $h_2$ represents the spacing between the wire cakes, as shown in FIG. 2. Optimized parameter space is determined based on the value ranges of the variables. A lightning impulse response algorithm can be used to calculate a response of any point x in the parameter space. A response calculation formula is as follows:

$$\mathbf{R(x)}=(E_{am}, E_{dm})$$

In the above formula, $E_{am}$ represents a maximum electric field in an airway between the high-voltage winding and the low-voltage winding, and $E_{dm}$ represents a maximum electric field between wire cakes inside the high-voltage winding.

A fitness function is defined as follows:

$$U(\mathbf{R}(x))=E_{am}/E_{a0}+E_{dm}/E_{d0}$$

In the above function, $E_{a0}$ and $E_{a0}$ respectively represent an allowable maximum electric field in the airway and an allowable maximum electric field between the wire cakes, $E_{am}$ represents the maximum electric field in the airway between the high-voltage winding and the low-voltage winding, and $E_{dm}$ represents the maximum electric field between the wire cakes inside the high-voltage winding.

A process of the insulation structure optimization is shown in FIG. 7, and the optimization objective is to find $x=x_{op}$ in the parameter space to minimize the $U(\mathbf{R}(x))$. Firstly, the initial samples are selected from the parameter space through the multidimensional uniform Latin hypercube sampling. A principle of the multidimensional uniform Latin hypercube sampling is to improve uniformity of the initial samples in multidimensional space by increasing a distance between sample points on a basis of satisfying one-dimensional hierarchical sampling. The response R(x) and the fitness U(R (x)) are calculated for each sample by using the aforementioned lightning impulse response algorithm. When fitness of a known sample meets a target requirement or a maximum quantity of optimization cycles is reached, the optimal parameters are output; otherwise, a cyclic optimization process is entered.

Because the lightning impulse response algorithm is based on a finite element model, parameter extraction and response calculation need to occupy lots of computational resources and time. To improve optimization efficiency, the Kriging surrogate model can be constructed based on existing sample data, and the surrogate model can quickly evaluate a response and fitness of an unknown sample.

In an optimization cycle, a set of new candidate samples is first generated through the multidimensional uniform Latin hypercube sampling, the Kriging surrogate model is used to calculate fitness of the candidate sample, and the candidate samples are sorted in the ascending order based on a fitness value. Then, the candidate samples are sorted in the descending order based on a minimum Euclidean distance from the candidate samples to an existing sample. Candidate samples with a minimum sum of two ranking sequence numbers are taken as new samples for the current optimization cycle. Lightning impulse of the new samples is calculated, and the Kriging surrogate model is updated based on a calculation result.

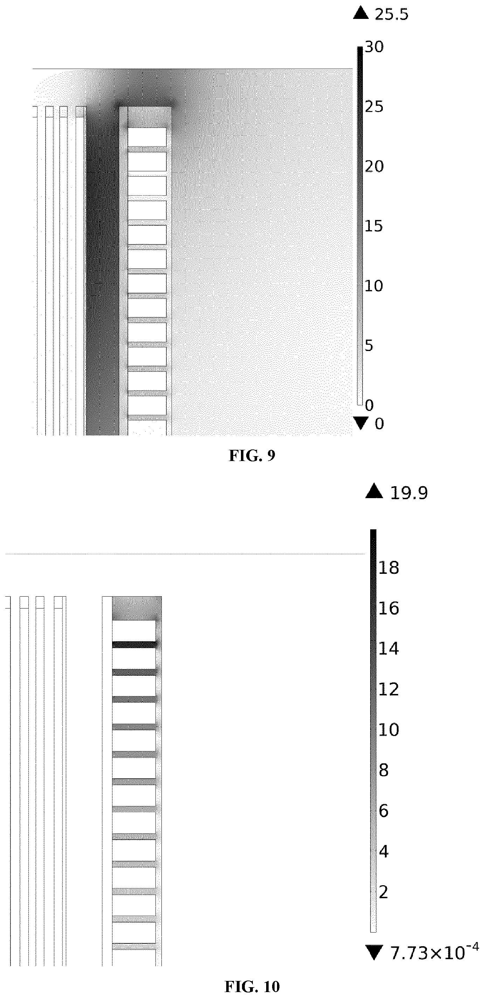

An optimized electric field distribution in the airway is shown in FIG. 9, with a maximum electric field of 25.5 kV/cm, which is decreased by 22.7% compared with that before the optimization. An electric field distribution between the wire cakes is shown in FIG. 10, with a maximum electric field of 19.9 kV/cm, which is decreased by 16.0% compared with that before the optimization. In a parameter obtaining process, a multidimensional uniform adoption algorithm is used to design the initial samples and the new samples during the optimization to prevent the optimization from getting stuck in a local optimum and improve optimization performance.

The present disclosure has following beneficial effects:

The transformer structure data is obtained, the two-dimensional axisymmetric finite element model and the equivalent circuit model of the winding are constructed based on the transformer structure data, and the information of the maximum electric field in the airway of the winding and the information of the maximum electric field in the wire cake are obtained based on the equivalent circuit model of the winding. The information of the maximum electric field includes the occurrence time and the position of the maximum electric field. The parameter optimization model is constructed based on the information of the maximum electric field in the airway of the winding, the information of the maximum electric field in the wire cake, and the data of the winding, and solved to obtain the optimal parameters, whereby the personnel optimize the transformer structure based on the optimal parameters. The optimal parameters include the width of the airway between the high-voltage windings, the width of the airway between the low-voltage windings, the thickness of the inner-side encapsulated layer of the high-voltage winding, the height of the wire cake of the high-voltage winding, and the spacing between the wire cakes. The method for optimizing an insulation structure can effectively reduce a maximum electric field in an airway and a maximum electric field between wire cakes for a dry-type transformer under the lightning impulse, and improve reliability and safety of an insulation structure of the dry-type transformer.

Embodiment 2

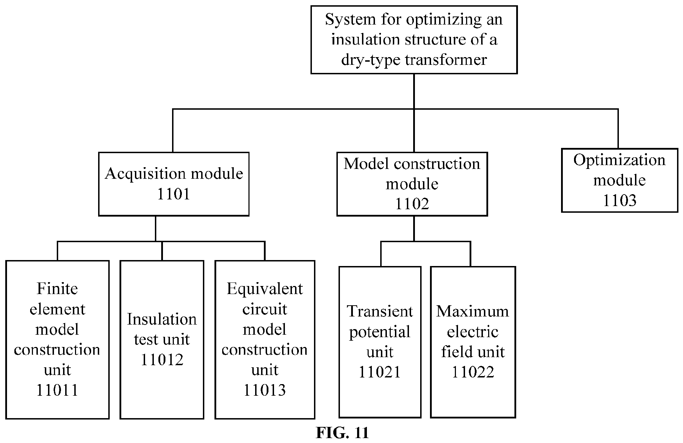

Correspondingly, FIG. 11 shows a system for optimizing an insulation structure of a dry-type transformer according to the present disclosure. As shown in the figure, the system for optimizing an insulation structure of a dry-type transformer includes:

an acquisition module 1101 configured to acquire transformer structure data, and construct a two-dimensional axisymmetric finite element model and an equivalent circuit model of a winding based on the transformer structure data;

a model construction module 1102 configured to obtain information of a maximum electric field in an airway of the winding and information of a maximum electric field in a wire cake based on the equivalent circuit model of the winding, where the information of the maximum electric field includes occurrence time and a position of the maximum electric field; and

an optimization module 1103 configured to construct a parameter optimization model based on the information of the maximum electric field in the airway of the winding, the information of the maximum electric field in the wire cake, and data of the winding, and solve the parameter optimization model to obtain optimal parameters, whereby personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes.

In a preferred embodiment, the acquisition module 1101 includes a finite element model construction unit 11011, an insulation test unit 11012, and an equivalent circuit model construction unit 11013.

The finite element model construction unit 11011 is configured to construct the two-dimensional axisymmetric finite element model of the winding based on the transformer structure data.

The insulation test unit 11012 is configured to conduct an insulation test based on the two-dimensional axisymmetric finite element model, and obtain equivalent resistance data, inductance data, and capacitance parameter data of each wire cake under the insulation test.

The equivalent circuit model construction unit 11013 is configured to construct the equivalent circuit model of the winding based on the equivalent resistance data, the inductance data, and the capacitance parameter data.

In a preferred embodiment, the model construction module 1102 includes a transient potential unit 11021 and a maximum electric field unit 11022.

The transient potential unit 11021 is configured to solve the equivalent circuit model of the winding to obtain a transient potential of each wire cake.

The maximum electric field unit 11022 is configured to input the transient potential into the two-dimensional axisymmetric finite element model for simulation, obtain a transient electric field at each point of the winding, and obtain the information of the maximum electric field in the airway of the winding and the information of the maximum electric field in the wire cake based on the transient electric field.

In a preferred embodiment, the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables;

obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes;

generating initial samples by performing multidimensional uniform sampling on the sample set, and calculating a lightning impulse response of the initial samples, so as to obtain responsiveness and fitness of each initial sample; and

if the responsiveness and the fitness of each initial sample meet a preset condition, outputting the initial samples as the optimal parameters; or if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

In a preferred embodiment, the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples;

calculating fitness of the new candidate samples by using the initial Kriging surrogate model, to obtain fitness of each new candidate sample, and sorting each new candidate sample in descending order based on the fitness of each new candidate sample to obtain a first ranking sequence number of each new candidate sample;

calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and

selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

For a more detailed working principle and step-by-step process of this embodiment, reference can be made to, but not limited to, the relevant description in Embodiment 1.

To sum up, the embodiments of the present disclosure have following beneficial effects:

Compared with the prior art, the present disclosure obtains the transformer structure data, constructs the two-dimensional axisymmetric finite element model and the equivalent circuit model of the winding based on the transformer structure data, obtains the information of the maximum electric field in the airway of the winding and the information of the maximum electric field in the wire cake based on the equivalent circuit model of the winding, constructs the parameter optimization model based on the information of the maximum electric field in the airway of the winding, the information of the maximum electric field in the wire cake, and the data of the winding, and solves the parameter optimization model to obtain the optimal parameters, whereby the personnel optimize the transformer structure based on the optimal parameters. The optimal parameters include the width of the airway between the high-voltage windings, the width of the airway between the low-voltage windings, the thickness of the inner-side encapsulated layer of the high-voltage winding, the height of the wire cake of the high-voltage winding, and the spacing between the wire cakes. The method for optimizing an insulation structure can effectively reduce a maximum electric field in an airway and a maximum electric field between wire cakes for a dry-type transformer under the lightning impulse, and improve reliability and safety of an insulation structure of the dry-type transformer.

The objectives, technical solutions, and beneficial effects of the present disclosure are further described in detail through the above specific embodiments. It should be understood that the above are merely some specific embodiments of the present disclosure, but are not intended to limit the protection scope of the present disclosure. It should be particularly noted that, any modifications, equivalent substitutions, improvements, and the like made by those skilled in the art within the spirit and principle of the present disclosure should be included within the protection scope of the present disclosure.

## Claims

1. A method for optimizing an insulation structure of a dry-type transformer, comprising:

   acquiring transformer structure data, and constructing a two-dimensional axisymmetric finite element model and an equivalent circuit model of a winding based on the transformer structure data;
   obtaining information of a maximum electric field in an airway of the winding and information of a maximum electric field in a wire cake based on the equivalent circuit model of the winding, wherein the information of the maximum electric field comprises occurrence time and a position of the maximum electric field; and
constructing a parameter optimization model based on the information of the maximum electric field in the airway of the winding, the information of the maximum electric field in the wire cake, and data of the winding, and solving the parameter optimization model to obtain optimal parameters, whereby personnel optimize a transformer structure based on the optimal parameters, wherein the optimal parameters comprise a width of an airway between high-voltage windings, a width of an airway between low-voltage windings, a thickness of an inner-side encapsulated layer of the high-voltage winding, a height of a wire cake of the high-voltage winding, and a spacing between wire cakes.

2. The method for optimizing an insulation structure of a dry-type transformer according to claim 1, wherein the constructing a two-dimensional axisymmetric finite element model and an equivalent circuit model of a winding based on the transformer structure data is specifically as follows:

   constructing the two-dimensional axisymmetric finite element model of the winding based on the transformer structure data;
   conducting an insulation test based on the two-dimensional axisymmetric finite element model, and obtaining equivalent resistance data, inductance data, and capacitance parameter data of each wire cake under the insulation test; and
   constructing the equivalent circuit model of the winding based on the equivalent resistance data, the inductance data, and the capacitance parameter data.

3. The method for optimizing an insulation structure of a dry-type transformer according to claim 1, wherein the obtaining information of a maximum electric field in an airway of the winding and information of a maximum electric field in a wire cake based on the equivalent circuit model of the winding is specifically as follows:

   solving the equivalent circuit model of the winding to obtain a transient potential of each wire cake; and
   inputting the transient potential into the two-dimensional axisymmetric finite element model for simulation, obtaining a transient electric field at each point of the winding, and obtaining the information of the maximum electric field in the airway of the winding and the information of the maximum electric field in the wire cake based on the transient electric field.

4. The method for optimizing an insulation structure of a dry-type transformer according to claim 1, wherein the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables; obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes; generating initial samples by performing multidimensional uniform sampling on the sample set, and calculating a lightning impulse response of the initial samples, so as to obtain responsiveness and fitness of each initial sample; and

if the responsiveness and the fitness of each initial sample meet a preset condition, outputting the initial samples as the optimal parameters; or if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

5. The method for optimizing an insulation structure of a dry-type transformer according to claim 4, wherein the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples; calculating fitness of the new candidate samples by using the initial Kriging surrogate model, to obtain fitness of each new candidate sample, and sorting each new candidate sample in descending order based on the fitness of each new candidate sample to obtain a first ranking sequence number of each new candidate sample; calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

6. A system for optimizing an insulation structure of a dry-type transformer, comprising:

an acquisition module configured to acquire transformer structure data, and construct a two-dimensional axisymmetric finite element model and an equivalent circuit model of a winding based on the transformer structure data; a model construction module configured to obtain information of a maximum electric field in an airway of the winding and information of a maximum electric field in a wire cake based on the equivalent circuit model of the winding, wherein the information of the maximum electric field comprises occurrence time and a position of the maximum electric field; and an optimization module configured to construct a parameter optimization model based on the information of the maximum electric field in the airway of the winding, the information of the maximum electric field in the wire cake, and data of the winding, and solve the parameter optimization model to obtain optimal parameters, whereby personnel optimize a transformer structure based on the optimal parameters, wherein the optimal parameters comprise a width of an airway between high-voltage windings, a width of an airway between low-voltage windings, a thickness of an inner-side encapsulated layer of the high-voltage winding, a height of a wire cake of the high-voltage winding, and a spacing between wire cakes.

7. The system for optimizing an insulation structure of a dry-type transformer according to claim 6, wherein the acquisition module comprises a finite element model construction unit, an insulation test unit, and an equivalent circuit model construction unit, wherein

the finite element model construction unit is configured to construct the two-dimensional axisymmetric finite element model of the winding based on the transformer structure data;
the insulation test unit is configured to conduct an insulation test based on the two-dimensional axisymmetric finite element model, and obtain equivalent resistance data, inductance data, and capacitance parameter data of each wire cake under the insulation test; and
the equivalent circuit model construction unit is configured to construct the equivalent circuit model of the winding based on the equivalent resistance data, the inductance data, and the capacitance parameter data.

8. The system for optimizing an insulation structure of a dry-type transformer according to claim 6, wherein the model construction module comprises a transient potential unit and a maximum electric field unit, wherein

the transient potential unit is configured to solve the equivalent circuit model of the winding to obtain a transient potential of each wire cake; and
the maximum electric field unit is configured to input the transient potential into the two-dimensional axisymmetric finite element model for simulation, obtain a transient electric field at each point of the winding, and obtain the information of the maximum electric field in the airway of the winding and the information of the maximum electric field in the wire cake based on the transient electric field.

9. The system for optimizing an insulation structure of a dry-type transformer according to claim 6, wherein the constructing a parameter optimization model based on the information of the maximum electric field in the airway of the winding, the information of the maximum electric field in the wire cake, and data of the winding, and solving the parameter optimization model to obtain optimal parameters is specifically as follows:

constructing the parameter optimization model by using the maximum electric field in the airway of the winding and the maximum electric field in the wire cake as optimization objectives, and by using the width of the airway between the high-voltage windings, the width of the airway between the low-voltage windings, the thickness of the inner-side encapsulated layer of the high-voltage winding, the height of the wire cake of the high-voltage winding, and the spacing between the wire cakes as optimization variables;
obtaining a sample set based on value ranges of the width of the airway between the high-voltage windings, the width of the airway between the low-voltage windings, the thickness of the inner-side encapsulated layer of the high-voltage winding, the height of the wire cake of the high-voltage winding, and the spacing between the wire cakes;
generating initial samples by performing multidimensional uniform sampling on the sample set, and calculating a lightning impulse response of the initial samples, so as to obtain responsiveness and fitness of each initial sample; and
if the responsiveness and the fitness of each initial sample meet a preset condition, outputting the initial samples as the optimal parameters; or
if the responsiveness and the fitness of each initial sample do not meet a preset condition, constructing a Kriging surrogate model using the sample set, using the Kriging surrogate model to update the sample set and calculate the lightning impulse response, and iteratively repeating until the optimal parameters are obtained.

10. The system for optimizing an insulation structure of a dry-type transformer according to claim 6, wherein the constructing an initial Kriging surrogate model using the sample set, using the Kriging surrogate model to update the sample set and calculate the lightning impulse response, and iteratively repeating until the optimal parameters are obtained is specifically as follows:

sampling the sample set through multidimensional uniform Latin hypercube sampling to obtain new candidate samples;
calculating fitness of the new candidate samples by using the initial Kriging surrogate model, to obtain fitness of each new candidate sample, and sorting each new candidate sample in descending order based on the fitness of each new candidate sample to obtain a first ranking sequence number of each new candidate sample; calculating a Euclidean distance between each new candidate sample and the sample set, sorting each new candidate sample in ascending order based on the Euclidean distance to obtain a second ranking sequence number of each new candidate sample, and adding up the first ranking sequence number and the second ranking sequence number of the new candidate sample to obtain a third ranking sequence number of the new candidate sample; and

selecting new candidate samples with the third ranking sequence number less than a preset value as new samples; and calculating lightning impulse for the new samples to obtain responsiveness and fitness of the new samples; and if the responsiveness and the fitness of the new samples meet the preset condition, outputting the new samples as the optimal parameters; or if the responsiveness and the fitness of the new samples do not meet the preset condition, updating the Kriging surrogate model based on the responsiveness to obtain an updated Kriging surrogate model, performing re-calculation on the sample set by using the updated Kriging surrogate model, and iteratively repeating until the optimal parameters are obtained.

Acquire transformer structure data, and construct a two-dimensional axisymmetric finite element model and an equivalent circuit model of a winding based on the transformer structure data

101

Obtain information of a maximum electric field in an airway of the winding and information of a maximum electric field in a wire cake based on the equivalent circuit model of the winding, where the information of the maximum electric field includes occurrence time and a position of the maximum electric field

102

Construct a parameter optimization model based on the information of the maximum electric field in the airway of the winding, the information of the maximum electric field in the wire cake, and data of the winding, and solve the parameter optimization model to obtain optimal parameters, such that personnel optimize a transformer structure based on the optimal parameters, where the optimal parameters include a width of an airway between high-voltage windings, a width of an airway between low-voltage windings, a thickness of an inner-side encapsulated layer of the high-voltage winding, a height of a wire cake of the high-voltage winding, and a spacing between wire cakes

103

FIG. 1

Iron core

Low-voltage winding

Air gap

High-voltage winding

FIG. 2

$L_{n,i},\ n{\neq}i$  $L_{n,i+1},\ n{\neq}i+1$

FIG. 3

FIG. 4

FIG. 5

FIG. 6

Start

Construct a two-dimensional axisymmetric simulation model of a winding

Extract a circuit parameter by using a wire cake as a unit

Construct an equivalent circuit model, and calculate a transient potential of each wire cake

Input the potential of the wire cake into the two-dimensional axisymmetric model for transient simulation to obtain a transient electric field distribution

Obtain maximum electric field strength between airways and maximum electric field strength between wire cakes

End

**FIG. 7**

```
┌─────────────────────┐                    ┌──────────────────────────────┐
│        Start        │                    │  Select optimal candidate    │
│                     │                    │  samples based on two sorting │
└─────────────────────┘                    │           results            │
           │                               └──────────────────────────────┘
           ▼                                              ▲
┌─────────────────────┐                    ┌──────────────────────────────┐
│ Determine parameter │                    │   Sort the candidate samples │
│ space based on a    │                    │   based on space uniformity  │
│ value range of an   │                    │                              │
│ optimization        │                    └──────────────────────────────┘
│ variable            │                                   ▲
└─────────────────────┘                    ┌──────────────────────────────┐
           │                               │   Sort the candidate samples │
           ▼                               │    based on the fitness      │
┌─────────────────────┐                    └──────────────────────────────┘
│ Perform             │                                   ▲
│ multidimensional    │                    ┌──────────────────────────────┐
│ uniform sampling in │                    │  The Kriging surrogate model │
│ the parameter space │                    │  estimates a response        │
│ to generate initial │                    │  and fitness of candidate    │
│ samples             │                    │  samples                     │
└─────────────────────┘                    └──────────────────────────────┘
```

▲ 25.5

**FIG. 9**

▲ 19.9

▼ $7.73 \times 10^{-4}$

**FIG. 10**

System for optimizing an insulation structure of a dry-type transformer

Acquisition module 1101

Model construction module 1102

Optimization module 1103

Finite element model construction unit 11011

Insulation test unit 11012

Equivalent circuit model construction unit 11013

Transient potential unit 11021

Maximum electric field unit 11022

**FIG. 11**

## INTERNATIONAL SEARCH REPORT

| International application No. |
|---|
| **PCT/CN2024/081820** |

**A. CLASSIFICATION OF SUBJECT MATTER**

G06F30/23(2020.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, ENTXTC, DWPI, ENTXT, CNKI: 变压器, 电抗器, 绝缘, 优化, 模型, 有限元, 等效电路, 最大电场, 绕组, 气道, 线饼, 包封, 宽度, 厚度, 间距, 距离, 目标, transformer, reactor, insula+, optimization, model, finite element, equivalent circuit, maximum electric field, winding, air passage, wire cake, encapsulat+, width, thick, distance, target

**C. DOCUMENTS CONSIDERED TO BE RELEVANT**

| Category* | Citation of document, with indication, where appropriate, of the relevant passages | Relevant to claim No. |
|---|---|---|
| PX | CN 117094279 A (GUANGDONG POWER GRID CO., LTD. et al.) 21 November 2023 (2023-11-21) claims 1-10 | 1-10 |
| A | CN 116151068 A (POWERCHINA GUIYANG ENGINEERING CORP., LTD.) 23 May 2023 (2023-05-23) entire document | 1-10 |
| A | CN 1222746 A (WEI SHENGZHANG) 14 July 1999 (1999-07-14) entire document | 1-10 |
| A | 解洋 (XIE, Yang). "干式变压器的电场分析及波过程研究 (Electric Field Analysis and Wave Process Research of Dry Transformer)" 中国优秀硕士学位论文全文数据库 (China Master's Theses Full-Text Database), 15 December 2018 (2018-12-15), entire document | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2024** | **07 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 517 576 A1**

<table>
<tr><td rowspan="2" colspan="2" align="center">**INTERNATIONAL SEARCH REPORT**</td><td>International application No.</td></tr>
<tr><td>**PCT/CN2024/081820**</td></tr>
</table>

**C.        DOCUMENTS CONSIDERED TO BE RELEVANT**

| Category* | Citation of document, with indication, where appropriate, of the relevant passages | Relevant to claim No. |
|---|---|---|
| A | JP 2021089153 A (HOKURIKU ELECTRIC POWER COMPANY et al.) 10 June 2021 (2021-06-10)<br>        entire document | 1-10 |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 117094279 | A | 21 November 2023 | None | | | |
| CN | 116151068 | A | 23 May 2023 | None | | | |
| CN | 1222746 | A | 14 July 1999 | CN | 1133184 | C | 31 December 2003 |
| JP | 2021089153 | A | 10 June 2021 | JP | 7426646 | B2 | 02 February 2024 |

Form PCT/ISA/210 (patent family annex) (July 2022)